# EUROPÄISCHE PATENTSCHRIFT

(11) **EP 0 915 799 B1**
(45) Veröffentlichungstag und Bekanntmachung des Hinweises auf die Patenterteilung: **05.04.2000**
(21) Anmeldenummer: 97931717.9
(22) Anmeldetag: 08.07.1997
(51) Int. Cl.: B62M 1/02, B62M 1/20, B62M 3/00

(54) **PEDALANORDNUNG FÜR FAHRRAD**
PEDAL ARRANGEMENT FOR A BICYCLE
ENSEMBLE PEDALES POUR BICYCLETTE

(30) Priorität: 01.08.1996 DE 19631104; 22.11.1996 DE 19648483
(43) Veröffentlichungstag der Anmeldung: 19.05.1999
(73) Patentinhaber: Schäffler, Max, 83666 Waakirchen (DE)
(72) Erfinder: Schäffler, Max, 83666 Waakirchen (DE)
(86) Internationale Anmeldenummer: DE9701440
(87) Internationale Veröffentlichungsnummer: WO9805549

(56) Entgegenhaltungen:
- BE-A- 511 847
- DE-C- 107 166
- FR-A- 755 303
- FR-A- 2 564 795

## Beschreibung

Die Erfindung betrifft ein Fahrrad mit zwei an einem Rahmen drehbar gelagerten Pedalen, wobei jedem der Pedale jeweils eine am Fahrrad befestigte Führungseinrichtung zugeordnet ist, welche eine Zwangsführung der Pedale derart bewirkt, daß die Trittflächen der Pedale während des Tretens stets etwa in einer vorgegebenen Richtung gehalten sind.

Ein Fahrrad dieser Art ist aus der BE 511 847 A bekannt. Dabei besteht die Zwangsführung aus einer am Rahmen befestigten ersten Stange sowie einer zweiten Stange, die endseitig V-förmig in zwei Teilstangen aufgespalten ist, wobei diese Teilstangen am Pedal befestigt sind. Beide Stangen sind über ein Gelenk direkt miteinander verbunden. Ein derartiger Aufbau der Zwangsführung hat vor allem den Nachteil, daß das Pedal beim Umlauf in Winkelpositionen gebracht wird, die für den Tretvorgang weniger vorteilhaft sind.

Der Erfindung liegt die Aufgabe zu Grunde, eine Verbesserung hinsichtlich der Pedalführung zu ermöglichen. Diese Aufgabe wird bei einem Fahrrad der eingangs genannten Art dadurch erreicht, daß die Führungseinrichtung eine Platte aufweist, von der beidseitig je zwei Stangen abgehen, von denen zwei am Fahrradrahmen und zwei an den Pedalen befestigt sind.

Durch diesen Aufbau bietet sich die Möglichkeit, die Winkelposition der Pedale während des Tretvorganges einzustellen.

Ein besonderer Vorteil der Erfindung ist auch darin zu sehen, daß die erfindungsgemäße Zwangsführung auch als Nachrüstsatz ausgebildet und nachträglich am Fahrrad angebracht werden kann.

Einer Weiterbildung der Erfindung liegt die Aufgabe zu Grunde, ein Fahrrad zu schaffen, bei dem die Kraftübertragung verbessert wird. Diese Aufgabe wird bei einem Fahrrad der eingangs genannten Art erfindungsgemäß dadurch gelöst, daß jedes der Pedale jeweils während des Tretens leicht nach vorne geneigt geführt ist.

Eine weitere Lösung der Aufgabe einer verbesserten Kraftübertragung besteht gemäß der Erfindung darin, daß ein mit den Pedalen jeweils kraftschlüssig in Verbindung stehender Kraftspeicher vorgesehen ist, der bei jeder Umdrehung der Pedale einmal gespannt und einmal entspannt wird.

Weiterbildungen der Erfindung sind in Unteransprüchen wiedergegeben.

Die Erfindung und ihre Weiterbildungen werden nachfolgend anhand von Zeichnungen näher erläutert. Es zeigen:
Figur 1 mit 3 in Seitenansicht verschiedene Positionen des Fahrrades gemäß einem ersten Ausführungsbeispiel der Erfindung
Fig. 4 das Fahrrad nach Fig. 2 in Längsrichtung gesehen
Figur 5 und 6 eine abgewandelte Ausführungsform des Fahrrades nach der Erfindung in verschiedenen Positionen in Seitenansicht
Figur 7 die Draufsicht der Ausführungsform nach Fig. 5 und 6. Figur 8 zeigt eine Seitenansicht einer Weiterbildung des erfindungsgemäßen Fahrrades und
Figur 9 das Fahrrad nach Figur 8 in Draufsicht.
Figur 10 in Seitenansicht verschiedene Positionen des Fahrrades gemäß einem abgewandelten Ausführungsbeispiel der Erfindung
Figur 11 eine abgewandelte Ausführungsform des Fahrrades nach der Erfindung in verschiedenen Positionen in Seitenansicht und
Figur 12 eine Darstellung des Kraftverlaufs für die Ausführungsform des Fahrrades nach Figur 11.

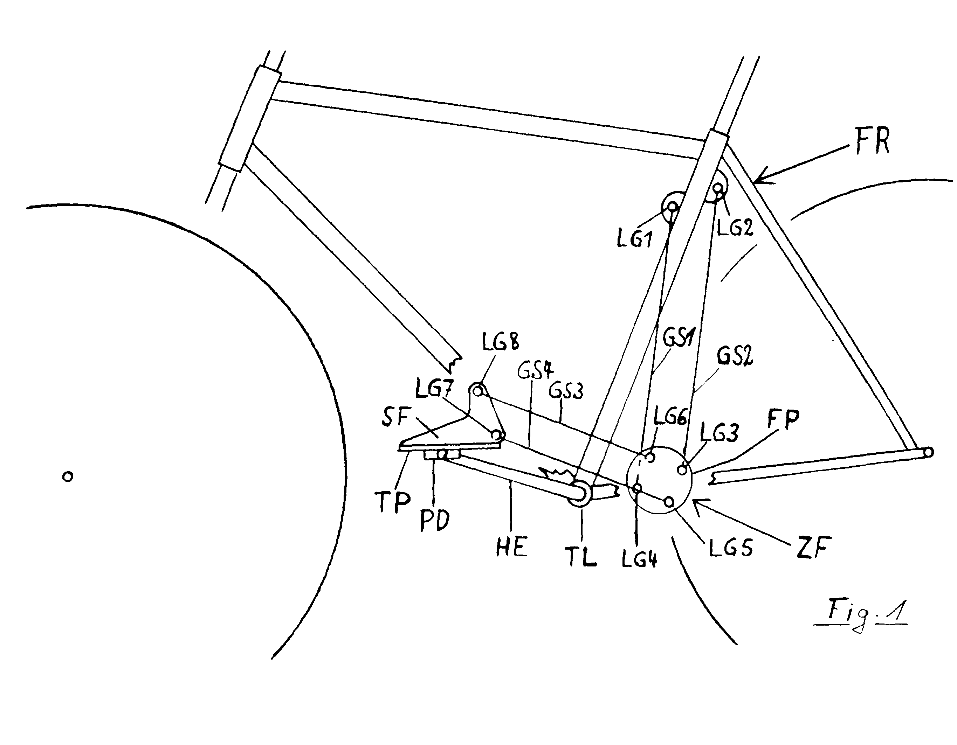

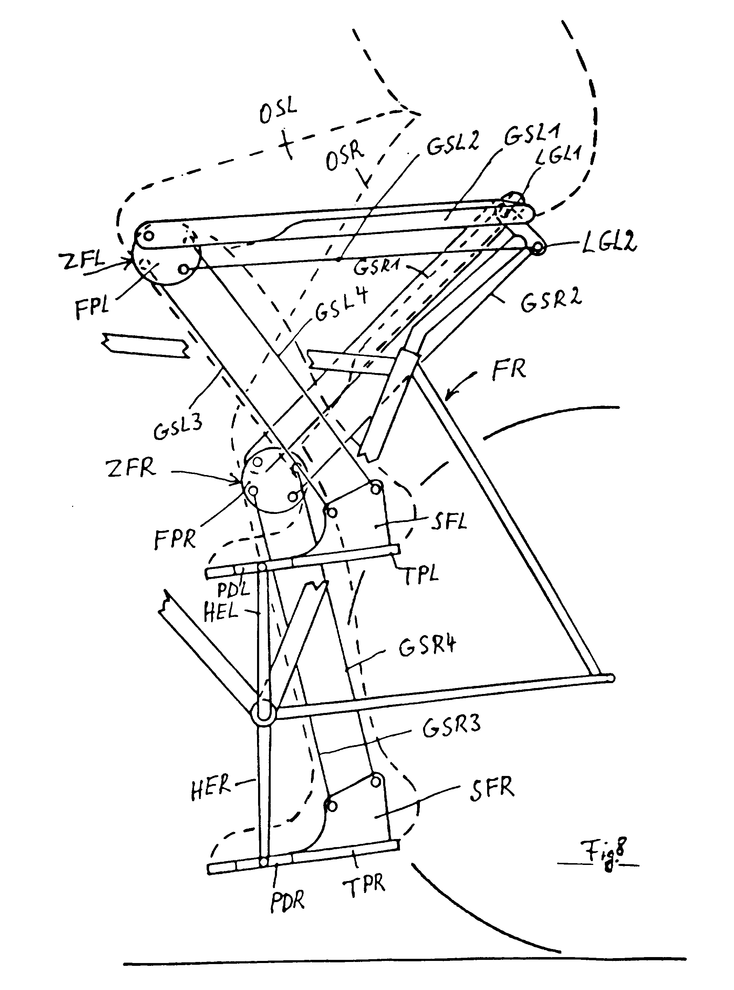

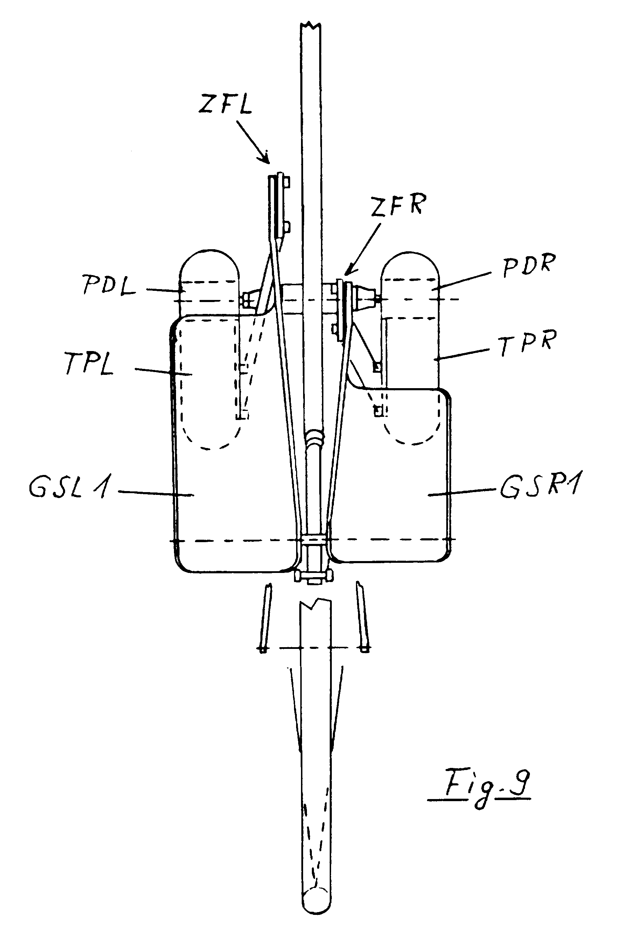

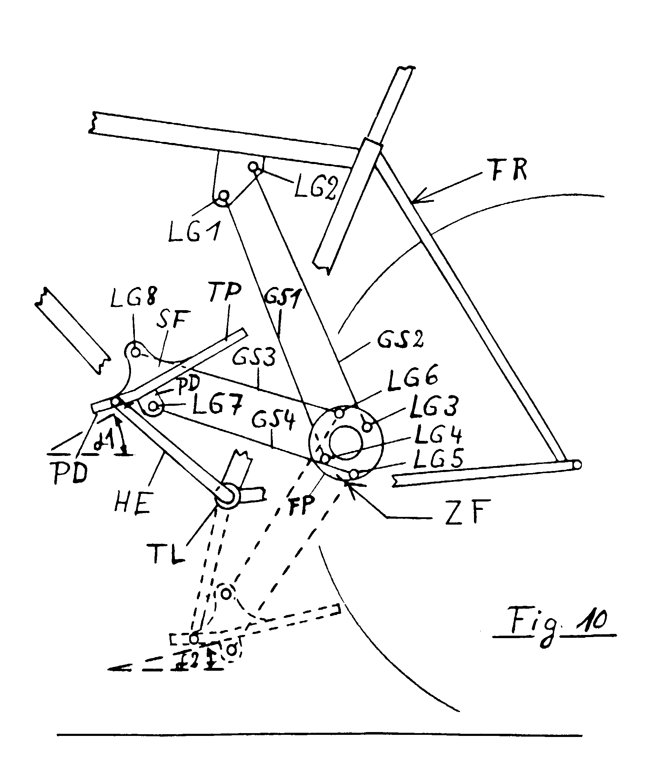

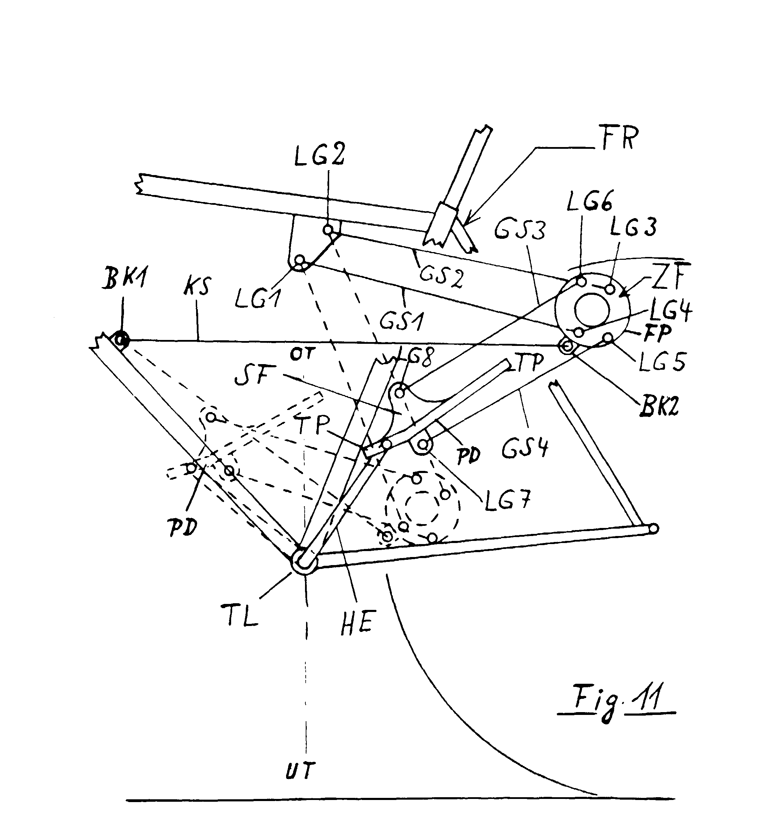

In Figur 1 ist in schematischer Darstellung ein Fahrrad FR dargestellt, das den üblichen Aufbau zeigt. An einem am Rahmen angebrachten Tretlager TL ist auf beiden Seiten jeweils (die hintere Seite ist in der vorliegenden Zeichnung zur Vereinfachung der Darstellung weggelassen) ein Hebelarm HE drehbar angebracht, an dessen äußerem Ende ein Pedal PD befestigt ist. An diesem Pedal ist eine Führung SF befestigt, welche der Auflage des die Kraft übertragenden (hier nicht dargestellten) Fußes dient. Diese Führung SF kann im einfachsten Fall als ein Blechbiege- oder Kunststoffteil ausgebildet sein und ist im Querschnitt gesehen vorteilhaft L-förmig gestaltet (vgl. Fig.4). Sie ist an mindestens einer Seite des Pedales PD befestigt. Die Führung SF kann auch anders, z.B. U-förmig gestaltet sein. Die Führung SF dient dazu ein Abrutschen des Fußes zu verhindern.

In vielen Fällen ist es wünschenswert, das Pedal PD während des Bewegungsvorganges nicht - wie üblich - frei drehbar zu halten, sondern in einer vorgegebenen, vorzugsweise etwa horizontalen Position. Hierfür ist eine Zwangsführungseinrichtung ZF vorgesehen, welche die Aufgabe hat, das Pedal PD stets in der horizontalen Lage zu fixieren. Die Zwangsführungseinrichtung ZF weist in ihrem Mittelteil eine Führungsplatte FP auf, von der aus vier beidseitig drehbar gelagerte stangenförmige Führungen (Gestänge) GS1 - GS4 abzweigen. Zwei dieser Führungen, nämlich GS1 und GS2 sind an dem Rahmen des Fahrrades FR in der Nähe des Sattels über Lager LG1 und LG2 drehbar, aber nicht verschiebbar befestigt, während die anderen beiden Führungsstangen GS3 und GS4 zu der Führungsplatte SF gelangen und dort vorzugsweise in deren vertikal verlaufendem Schenkelteil ebenfalls über Lager LG7 und LG8 drehbar befestigt sind. Bei der Führungsplatte FP sind vier Lagerstellen LG3 bis LG6 vorgesehen, in welchen die Enden der Führungsstangen GS1 bis GS4 drehbar gelagert sind. Die Führungsstangen GS1 bis GS4 sind so angeordnet, daß sie möglichst nahe an dem Rahmen des Fahrrades FR angebracht sind. Um Verletzungen auszuschließen, können sie auch über entsprechende Abdeckeinrichtungen, wie Netze, Körbe oder dergleichen nach außen hin, abgesichert sein.

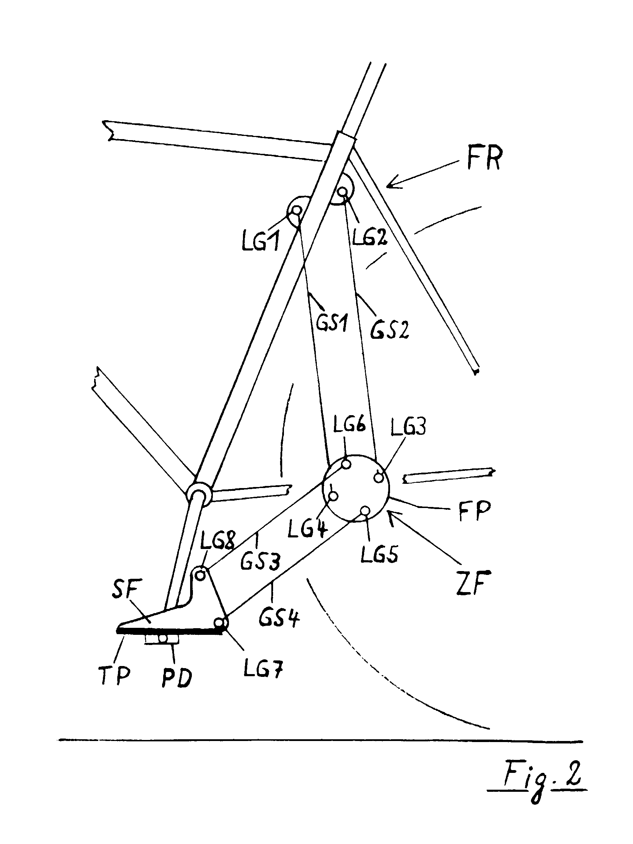

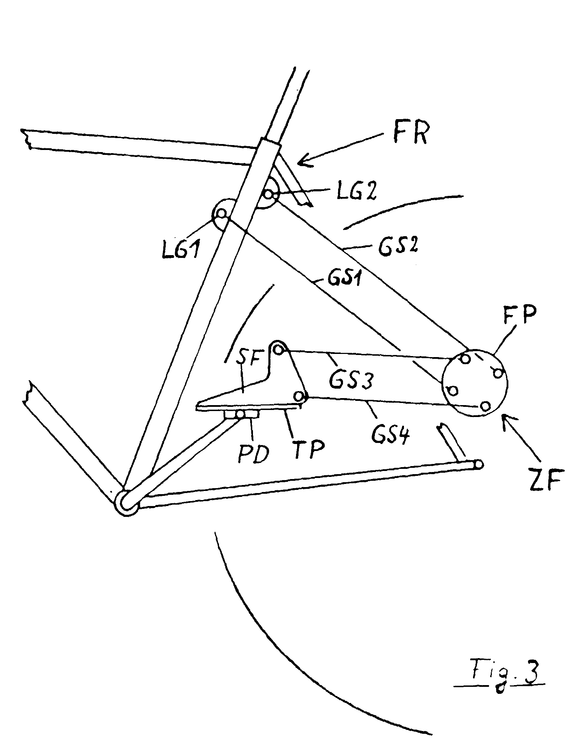

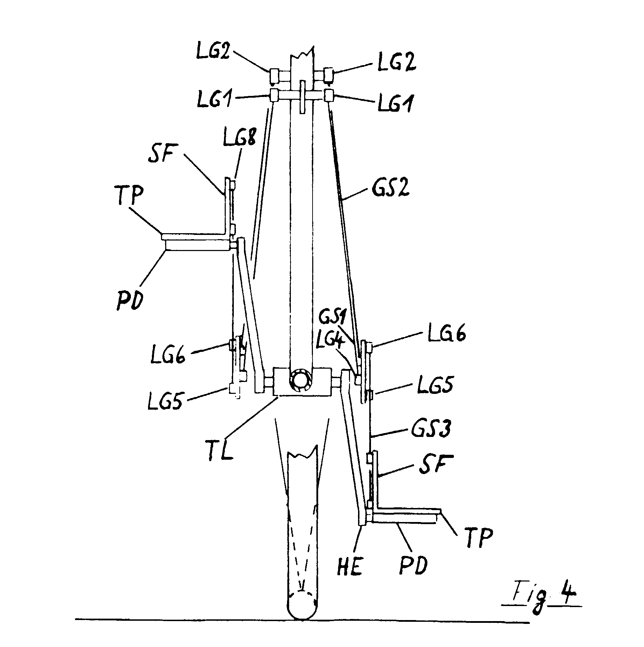

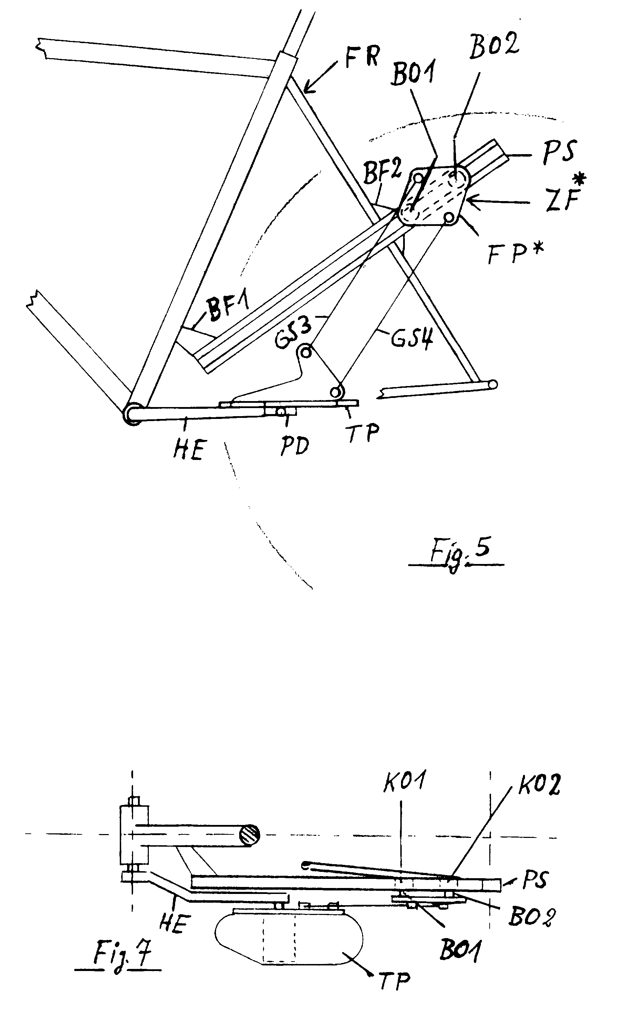

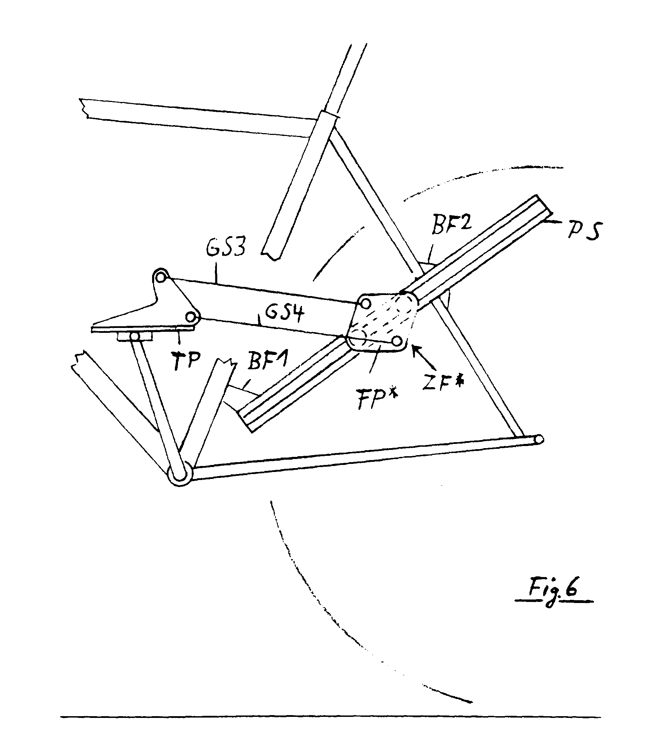

Struktur und Aufbau der Zwangsführungseinrichtung ZF sind so gewählt, daß bei dem Drehvorgang des Hebels HE das Pedal PD stets horizontal ausgerichtet bleibt, wie sich insbesondere aus den Figuren 2 und 3 ergibt, in denen andere Winkellagen des Hebels HE dargestellt sind.

Die Führungsstangen GS1 bis GS4 bestehen zweckmäßig aus dünnen Metallrohren, während die Führungsplatte FP aus Metall oder aus Kunststoff hergestellt sein kann.

Figur 4 zeigt zur Verdeutlichung die vollständige Zwangsführung in Längssicht gesehen, wobei für beide Seiten die gleichen Bezugszeichen verwendet sind, weil diese Teile spiegelbildlich gleich ausgebildet sind.

Anstelle der dargestellten Zwangsführung ZF können auch verschiedene andere Führungen, z.B. Kulissenführungen verwendet werden, die dazu geeignet sind, das Pedal PD fortlaufend während eines Drehvorganges räumlich etwa in der horizontalen Lage zu fixieren.

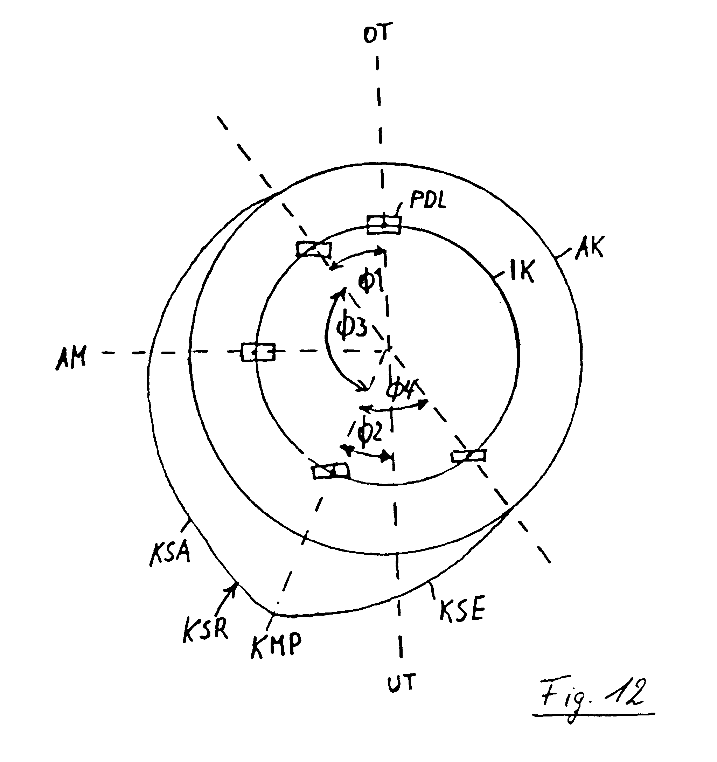

In Figur 5 ist als Beispiel eine abgewandelte Zwangsführung ZF* dargestellt, wobei für gleichbleibende Teile die gleichen Bezugszeichen wie bei den vorhergehenden Figuren verwendet sind. Die beiden Führungsstangen GS3 und GS4 entsprechen der Ausführungsform nach den Figuren 1 mit 4. Ebenso ist die Ausgestaltung und Anordnung der Trittplatte TP auf dem Pedal PD in gleicher Weise vorgenommen wie dort. Geändert ist in erster Linie die Ausgestaltung der Führungsplatte FP* der Zwangsführung ZF*. Die beiden Gestänge GS3 und GS4 sind weiterhin an der Führungsplatte FP* befestigt, jedoch wird im Gegensatz zu den Ausführungsbeispielen nach Figur 1 bis 4 die Verschiebung der Führungsplatte FP* hier anders vorgenommen und zwar dadurch, daß eine Profilschiene PS am Rahmen des Fahrrades FR befestigt ist und zwar endseitig über zwei voneinander entfernte Befestigungsstellen BF1 und BF2. Die Profilschiene PS ist also starr am Rahmen des Fahrrades FR gehalten, wobei im vorliegenden Beispiel die Befestigung an den hinteren Rahmenteilen durchgeführt ist. Es wäre auch möglich, andere Rahmenteile für die Befestigung heranzuziehen, beispielsweise mittlere Rahmenteile. Die Profilschiene PS ist im vorliegenden Beispiel mit etwa U-förmigem Querschnitt ausgebildet, wobei die Enden der freien Schenkel nach innen umgebogen sind. An der Führungsplatte FP* sind zwei Bolzen BO1 und BO2 angebracht, die mit ihren entsprechend verbreiterten Köpfen KO1 und KO2 (vgl. Draufsicht nach Fig.7) im verbreiterten Nutbereich der Profilschiene PS gleiten können. Dadurch führt die Führungsplatte FP* beim Treten eine Gleitbewegung längs der Profilschiene PS durch, wobei gleichzeitig durch die Einwirkung der Führungsstangen GS3 und GS4 der Abstand zwischen dem Pedal PD und der Führungsplatte FP* konstant gehalten wird und das Pedal PD stets in waagerechter Position zwangsgeführt ist.

Die Figur 6 zeigt eine unterschiedliche Winkelstellung des Pedals PD, wobei die Verschiebebewegungen der Führungsplatte FP* und die Beibehaltung der horizontalen Position des Pedals deutlich hervorgehen.

In den Figuren 8 und 9 sind Weiterbildungen dargestellt, mit denen verbesserte Bewegungsvorgänge durchgeführt werden können. Für gleichbleibende Teile sind die Bezugszeichen aus den vorangegangenen Figuren übernommen, so daß diese hier nicht mehr erläutert werden müssen, weil ihre Wirkungsweise denen der vorangegangenen Figuren entspricht. Da HIER beide Seiten dargestellt wurden, sind die jeweils in Fahrtrichtung gesehen links befindlichen Teile mit dem Buchstaben "L" und die rechts liegenden Teile mit dem Buchstaben "R" ergänzt. In Figur 8 ist außerdem der Rahmen des Fahrrades FR zur besseren Übersichtlichkeit teilweise ausgebrochen dargestellt, so daß die dahinterliegende rechte Seite besser sichtbar ist.

Die Konturen des rechten und des linken Beins sind jeweils gestrichelt dargestellt Es ist davon ausgegangen, daß der linke Oberschenkel OSL sich in der obersten Position befindet (vorderer Teil in der Zeichnung) während der zugehörige rechte Oberschenkel OSR seine tiefste Position einnimmt (hinterer Teil in der Zeichnung).

In Figur 8 ist das obere Ende der Zwangsführungen ZFL und ZFR mit den Lagerstellen LGL1 und LGL2 jeweils sehr weit oben befestigt, bevorzugt dort, wo im Angriffsbereich die Kraft einsetzt, also etwa im Sattelbereich und insbesondere oberhalb des Rahmens. Hierzu ist eine, nämlich die oben liegende Führungsstange GSL1 bzw. GSR1 vorteilhaft etwa schalen- oder wannenförmig ausgebildet und dient als Auflage für den der Kraftübertragung dienenden Oberschenkel OSL bzw. OSR. Unter Umständen könnte somit, wie dargestellt, auf einen Sattel sogar ganz verzichtet werden, weil der Oberschenkel OS1 bzw. OS2 auf der wannenförmig gestalteten Führungsstange GS1 bzw. GS2 gesichert aufliegt und so dem Fahrer genügend Halt gibt. Dies gilt zumindest für die Zeit der Tretvorgänge, während z. B. beim Bergabfahren der Fahrer sich auf den vorhandenen Sattel setzen kann. In dem schalenförmigen Bereich GS1 bzw. GS2 können zweckmäßig polsternde Zwischenlagen vorgesehen sein, die eine möglichst schonende Auflage des Oberschenkels OS1 bzw. OS2 ermöglichen. Auf diese Weise wird die Kraftübertragung nicht nur - wie üblich - durch den unteren Teil (Vorderfuß und Pedal) bewirkt, sondern es wird zusätzlich Kraft durch den oberen Teil des Oberschenkels OS1 bzw. OS2 übertragen. Dies ermöglicht eine besonders vorteilhafte Ausnutzung des zur Verfügung stehenden Kraftpotentials, wobei, wie bei den vorangegangenen Figuren, die waagerechte Ausrichtung im Bereich der Auflage des Fußes auf den Pedalen PDL und PDR weiterhin gewährleistet bleibt.

Die Auflage- oder Trittplatten TPL bzw. TPR an den Pedalen PDL bzw. PDR können ggf. auch nur in Form von Stegen oder Rippen, d.h. durchbrochen ausgebildet sein, um Gewicht zu sparen. Auch kann es zweckmäßig sein, diese nur als einseitige Verlängerung des Pedals auszubilden, vorzugsweise im rückwärtigen Bereich, während im vorderen Bereich beispielsweise die bekannten Riemenhalterungen für die Fußspitzen vorgesehen sein können.

In Figur 10 ist in schematischer Darstellung ein Fahrrad FR dargestellt, das den üblichen Aufbau zeigt. An einem am Rahmen angebrachten Tretlager TL ist auf beiden Seiten jeweils (die hintere Seite ist in der vorliegenden Zeichnung zur Vereinfachung der Darstellung weggelassen) ein Hebelarm HE drehbar angebracht, an dessen äußerem Ende ein Pedal PD befestigt ist. An diesem Pedal ist eine Führung SF befestigt, welche der Auflage des die Kraft übertragenden (hier nicht dargestellten) Fußes dient. Diese Führung SF kann im einfachsten Fall als ein Blechbiege- oder Kunststoffteil ausgebildet sein und ist im Querschnitt gesehen vorteilhaft etwa L-förmig gestaltet. Sie ist an mindestens einer Seite des Pedales PD befestigt. Die Führung SF kann auch anders, z.B. U-förmig gestaltet sein. Die Führung SF dient dazu ein Abrutschen des Fußes zu verhindern.

In vielen Fällen ist es wünschenswert, das Pedal PD während des Bewegungsvorganges nicht - wie üblich - frei drehbar zu halten, sondern in einer vorgegebenen, vorzugsweise in etwa horizontalen Position. Hierfür ist eine Zwangsführungseinrichtung ZF vorgesehen, welche die Aufgabe hat, das Pedal PD stets in der vorgesehenen Lage zu fixieren. Die Zwangsführungseinrichtung ZF weist in ihrem Mittelteil eine Führungsplatte FP auf, von der aus vier beidseitig drehbar gelagerte stangenförmige Führungen (Gestänge) GS1 - GS4 abzweigen. Zwei dieser Führungen, nämlich GS1 und GS2 sind an dem Rahmen des Fahrrades FR in der Nähe des Sattels über Lager LG1 und LG2 drehbar, aber nicht verschiebbar befestigt, während die anderen beiden Führungsstangen GS3 und GS4 zu der Führungsplatte SF gelangen und dort vorzugsweise in deren vertikal verlaufendem Schenkelteil ebenfalls über Lager LG7 und LG8 drehbar befestigt sind. Bei der Führungsplatte FP sind vier Lagerstellen LG3 bis LG6 vorgesehen, in welchen die Enden der Führungsstangen GS1 bis GS4 drehbar gelagert sind. Die Führungsstangen GS1 bis GS4 sind so angeordnet, daß sie möglichst nahe an dem Rahmen des Fahrrades FR angebracht sind. Um Verletzungen auszuschließen, können sie auch über entsprechende Abdeckeinrichtungen, wie Netze, Körbe oder dergleichen nach außen hin, abgesichert sein.

Struktur und Aufbau der Zwangsführungseinrichtung ZF sind so gewählt, daß bei dem Drehvorgang des Hebels HE das Pedal PD stets in einer vorgegebenen Position, vorzugsweise etwa horizontal, ausgerichtet bleibt.

Die Trittplatte TP ist in Figur 10 nicht mehr vollständig waagerecht angeordnet, sondern zeigt eine leichte Kippung, und zwar in Bewegungsrichtung gesehen nach unten, d.h. der hintere, dem äußeren Ende (also der Ferse) zugekehrte Teil liegt höher als der vordere im Bereich des Frontteils des Pedals PD angeordnete (also bei den Zehen liegende) Bereich. Der Anstellwinkel α1 wird zweckmäßig zwischen 15 und 40° gewählt, wobei bevorzugt Werte zwischen 25 und 35° möglich sind.

Diese Anordnung einer leicht geneigten Grundplatte TP hat den Vorteil, daß die Kraftübertragung günstiger gestaltet werden kann und ein effizienterer und vor allen Dingen für den Antrieb kraftschonenderer Bewegungsvorgang durchgeführt werden kann. Die Ausgestaltung der Zwangsführung kann zusätzlich vorteilhaft so gewählt werden, daß im oberen Totpunkt der Winkel α1 größer ist als der Winkel α2 im unteren Totpunkt, wobei α2 zweckmäßig zwischen 5 und 30°, bevorzugt zwischen 15 und 25° gewählt wird.

Im vorliegenden Beispiel ist die Trittplatte TP zusätzlich in sich etwas geknickt und zwar im hinteren Teil nach oben um etwa 5°. Die vorher genannten Winkelwerte für α1 und α2 beziehen sich in diesem Fall auf den hinteren Teil der Trittplatte TP.

Die paarweise zusammengehörenden Führungen oder Gestänge, nämlich GS1 und GS2 einerseits sowie GS3 und GS4 andererseits verlaufen nicht parallel zueinander sondern sind im Bereich der Führungsplatte FP weiter voneinander entfernt als im Bereich der Lager am Rahmen. Die Neigung entspricht zweckmäßig etwa der Differenz von α1 - α2, d.h. Winkelwerten bevorzugt etwa um 10°.

In Figur 11 ist unter Verwendung der Bezugszeichen aus der vorhergehenden Figur 10 für gleiche Teile eine Abwandlung der Anordnung insofern dargestellt, als hier ein Kraftspeicher KS, bevorzugt in Form einer Band- oder Expanderfeder, einer Gummifeder o.dgl. vorgesehen ist, der an einem Ende am Rahmen FR befestigt ist (Befestigungsstelle BK1) und am anderen mit der Führungsplatte FP in Verbindung steht (Lagerpunkt BK2). Insgesamt sind zwei derartige Kraftspeicher vorgesehen, d.h. auf jeder Seite einer, wobei in der Zeichnung der in Fahrtrichtung gesehen linke gezeichnet ist. Die Anordnung dieses als Kraftspeicher dienende Federelements ist so getroffen, wie sich aus Figur 11 ergibt.

Die Auf- und Entladung des Kraftspeichers erfolgt vorteilhaft wechselweise, d.h. das linke Pedal spannt den rechten Kraftspeicher und umgekehrt. wie dies in Figur 12 schematisch näher dargestellt ist. Der innere Kreis IK symbolisiert die Kreisbahn der Pedale, wobei die gespeicherte Kraft als Kurve KSR über der äußeren Kreisbahn AK gezeichnet ist. Nach dem oberen Totpunkt OT und zwar vorzugsweise in einem Winkel φ1 von etwa 20° bis 40°, vorzugsweise um 30°, entfernt von diesem Totpunkt wird durch das linke Pedal PDL eine allmählich zunehmende Spannung des rechten Kraftspeichers (angedeutet durch die Kurve KSA mit dem Winkelbereich φ3) durchgeführt, und zwar bis zu einem Winkel φ2 ( zwischen 20° bis 40°, vorzugsweise um 30°) vor dem unteren Totpunkt UT (d.h. der rechte Hebelarm HE verläuft hier schräg nach unten). Wenn der Punkt KMP mit der maximalen Kraftspeicherung erreicht ist, tritt eine allmähliche Entspannung des Kraftspeichers ein, d.h. der rechte Kraftspeicher gibt seine Kraft entsprechend der Kurve KSE zusätzlich an den sich drehenden rechten Hebelarme ab, welcher bei KMP um φ2 vor dem oberen Totpunkt OT liegt und welcher dadurch im Bereich bis zum und über den oberen Totpunkt OT hinaus eine zusätzliche Kraftkomponente erfährt. Eine derartige Zusatzkraft ist von dem normalen Antrieb her sonst nicht erreichbar, weil dort im unteren bzw. oberen Totpunkt UT bzw. OT nur eine sehr geringe Kraft ausgeübt werden kann. Durch den im wesentlichen in Querrichtung, also etwa tangential wirkenden Kraftanteil KSR wird also das rechte Pedal in seiner oberen Kurvenbahn über den Totpunkt OT hinweggezogen und dadurch ein gleichmäßigerer und auch effektiverer Bewegungsvorgang gewährleistet. Der kraftspeichernde d.h. kraftaufnehmende Bereich φ3 ist zweckmäßig größer gewählt als der kraftabgebende Bereich φ4, wobei zweckmäßig etwa gilt φ3 =2 φ4. Außerdem gelten die Beziehungen φ1 + φ3 + φ2. = 180° und φ4 = φ1 + φ2.

Die Speicherung von Kraft im Kraftspeicher KS erfolgt bevorzugt in demjenigen Bereich, in dem infolge der Winkelstellung des Tretarmes HE ohnehin ein großer Hebelarm vorhanden ist, d.h. beiderseits des maximalen äußeren Drehmomentpunktes AM.

Da die entsprechenden Antriebsvorrichtungen und die Zwangsführungen ZF auf beiden Seiten des Rahmens FR vorhanden sind, ist natürlich auch auf jeder der beiden Seiten ein entsprechender Kraftspeicher vorzusehen, welcher auf die zugehörige Führungsplatte FP wirkt.

Im vorliegenden Beispiel ist der Kraftspeicher KS mit der Zwangsführung ZF verbunden. Es ist aber auch möglich, zwei selbständige Stangen vorzusehen, die gelenkig miteinander verbunden sind, wobei eine der Stangen an dem Rahmen FR und die andere im weitesten Sinn an dem Pedal, insbesondere an der Tretplatte befestigt ist. Der Kraftspeicher wird dann mit einem Ende im Bereich des Gelenkes und mit dem anderen Ende im Bereich des Rahmens FR Befestigt. Die Spannung und Entspannung erfolgt auch hier in der in Figur 12 beschriebenen Weise. Die vorstehend beschriebene Variante ist besonders bei einer Anordnung entsprechend Figur 8 und 9 des Hauptpatentes einsetzbar.

Werden Clip-Pedale verwendet, dann sollten diese zweckmäßig hinter der Pedalachse einrasten.

## Patentansprüche

1. Fahrrad (FR) mit zwei an einem Rahmen drehbar gelagerten Pedalen (PD), wobei jedem der Pedale (PD) jeweils eine am Fahrrad (FR) befestigte Führungseinrichtung zugeordnet ist, welche eine Zwangsführung (ZF) der Pedale derart bewirkt, daß die Trittflächen der Pedale (PD) während des Tretens stets etwa in einer vorgegebenen Richtung gehalten sind, dadurch gekennzeichnet, daß die Führungseinrichtung (ZF) eine Platte (FP) aufweist, von der beidseitig je zwei Stangen (GS1,GS2,GS3,GS4) abgehen, von denen zwei am Fahrradrahmen und zwei an den Pedalen (PD) befestigt sind.

2. Fahrrad nach Anspruch 1, dadurch gekennzeichnet, daß die Führungseinrichtung (ZF) als Nachrüstsatz ausgebildet ist, der nachträglich am Fahrrad (FR) angebracht werden kann.

3. Fahrrad nach einem der vorhergehenden Ansprüche, dadurch gekennzeichnet, daß an den Pedalen (PD) eine Führungsplatte (SF) angebracht ist, die als Trittfläche für den Fuß und/oder als Angriffspunkt für die Führungseinrichtung (FE) dient.

4. Fahrrad nach Anspruch 3, dadurch gekennzeichnet, daß an der Führungsplatte ein vertikal verlaufender Schenkelteil vorgesehen ist, an dem die entsprechenden Stangen (GS3, GS4) befestigt sind.

5. Fahrrad nach einem der vorhergehenden Ansprüche, dadurch gekennzeichnet, daß im oberen Bereich der Zwangsführung (ZFL, ZFR) eine Auflage für den Oberschenkel (OSL, OSR) vorgesehen ist.

6. Fahrrad nach Anspruch 5, dadurch gekennzeichnet, daß die Auflage für den Oberschenkel (OSL, OSR) wannenförmig ausgebildet ist.

7. Fahrrad nach Anspruch 5 oder 6, dadurch gekennzeichnet, daß die Auflage für den Oberschenkel (OSL, OSR) mit einer Polsterung versehen ist

8. Fahrrad nach einem der Ansprüche 5 bis 7, dadurch gekennzeichnet, daß die Auflage für den Oberschenkel (OSL, OSR) den Sitz für den Fahrer bildet, wobei das Fahrrad vorzugsweise ohne Sattel bleibt.

9. Fahrrad mit zwei an einem Rahmen (FR) drehbar gelagerten Pedalen (PD), wobei jedem der Pedale (PD) jeweils eine am Fahrrad befestigte Führungseinrichtung (ZF) zugeordnet ist, welche eine Zwangsführung der Pedale (PD) derart bewirkt, daß die Trittflächen der Pedale (PD) während des Tretens stets weitgehend in einer vorgegebenen Richtung gehalten sind, insbesondere nach einem der vorhergehenden Ansprüche,
dadurch gekennzeichnet,
daß jedes der Pedale (PD) jeweils während des Tretens leicht nach vorne geneigt geführt ist.

10. Fahrrad nach Anspruch 9, dadurch gekennzeichnet, daß der Neigungswinkel (α1) gegen die Horizontale zwischen 15 und 40°, bevorzugt zwischen 25 und 35° gewählt ist.

11. Fahrrad nach einem der Ansprüche 9 oder 10, dadurch gekennzeichnet, daß der Neigungswinkel (α1) im oberen Totpunkt größer gewählt ist als der Neigungswinkel (α2) im unteren Totpunkt.

12. Fahrrad nach einem der vorhergehenden Ansprüche, dadurch gekennzeichnet, daß eine am Pedal (PD) angebrachte Trittplatte (TP) in sich etwas geknickt ist und zwar im hinteren Teil nach oben, vorzugsweise um etwa 5°.

13. Fahrrad mit zwei an einem Rahmen (FR) drehbar gelagerten Pedalen (PD), wobei jedem der Pedale (PD) jeweils eine am Fahrrad befestigte Führungseinrichtung (ZF) zugeordnet ist, welche eine Zwangsführung der Pedale (PD) derart bewirkt, daß die Trittflächen der Pedale (PD) während des Tretens stets weitgehend in einer vorgegebenen Richtung gehalten sind, insbesondere nach einem der vorhergehenden Ansprüche,
dadurch gekennzeichnet,
daß ein mit den Pedalen jeweils kraftschlüssig in Verbindung stehender Kraftspeicher (KS) vorgesehen ist, der bei jeder Umdrehung der Pedale (PD) einmal gespannt und einmal entspannt wird.

14. Fahrrad nach Anspruch 13, dadurch gekennzeichnet, daß zum Spannen des linken Kraftspeichers jeweils das rechte Pedal dient und umgekehrt.

15. Fahrrad nach einem der Ansprüche 13 oder 14, dadurch gekennzeichnet, daß das Spannen des Kraftspeichers jeweils nach dem oberen Totpunkt des Pedales beginnt und vor dem unteren Totpunkt endet.

16. Fahrrad nach einem der Ansprüche 13 bis 15, dadurch gekennzeichnet, daß das Spannen des Kraftspeichers (KS) in einem größeren Winkelbereich (φ3) erfolgt als das Entspannen (φ4).

17. Fahrrad nach einem der Ansprüche 13 bis 16, dadurch gekennzeichnet, daß der Kraftspeicher (KS) mit der Zwangsführung (ZF) verbunden ist.

18. Fahrrad nach einem der Ansprüche 13 bis 16, dadurch gekennzeichnet, daß der Kraftspeicher (KS) mit einer eigenen gelenkigen Führung verbunden ist.

## Claims

1. A bicycle (FR) with two pedals (PD) arranged rotatable on a frame, whereby each of the pedals (PD) is allocated to a guide mechanism attached to the bicycle (FR) which causes a restricted guidance (ZF) of the pedals in that the tread surface of the pedals (PD) is retained approximately in a given direction during pedalling, characterised in that the guide mechanism (ZF) has a plate (FP), from which two rods each (GS1, GS2, GS3, GS4) protrude, of which two have been attached to the bicycle frame and two have been attached to the pedals (PD).

2. A bicycle as set forth in claim (1) characterised in that the guide mechanism (ZF) is designed as a retrofit kit, which can be attached to the bicycle (FR) subsequently.

3. A bicycle as set forth in one of the claims mentioned above characterised in that a guide plate (SF) has been fitted to the pedals (PD) which is used as a treading surface for the foot and/or as a contact point for the guide mechanism (FE).

4. A bicycle as set forth in claim (3) characterised in that a vertical leg section has been provided on the guide plate, to which the corresponding rods (GS3, GS4) have been attached.

5. A bicycle as set forth in one of the claims mentioned above characterised in that the upper area of the restricted guidance (ZFL, ZFR) has been provided with a support for the thigh (OSL, OSR).

6. A bicycle as set forth in claim (5) characterised in that the support for the thigh (OSL, OSR) has been shaped like a trough.

7. A bicycle as set forth in claim (5) or (6) characterised in that the support for the thigh (OSL, OSR) has been provided with a padding.

8. A bicycle as set forth in one of the claims (5) through (7) characterised in that the support for the thigh (OSL, OSR) is designed as the seat for the rider, whereby the bicycle preferably remains without a saddle.

9. A bicycle with two pedals (PD) arranged rotatable on a frame, whereby each of the pedals (PD) is allocated to a guide mechanism attached to the bicycle which causes a restricted guidance of the pedals (PD) in that the tread surface of the pedals (PD) is retained approximately in a given direction during pedalling, characterised especially as set forth in one of the claims mentioned above in that each of the pedals (PD) are inclined slightly to the front during pedalling.

10. A bicycle as set forth in claim (9) characterised in that the inclination angle (α1) against the horizontal is selected between 15° and 40°, preferably between 25° and 35°.

11. A bicycle as set forth in one of the claims (9) or (10) characterised in that the inclination angle (α1) is larger in the upper dead centre than the inclination angle (α2) in the lower dead centre.

12. A bicycle as set forth in one of the claims mentioned above characterised in that one of the tread plates attached to the pedal (PD) is bent slightly with the rear section rising, preferably by about 5°.

13. A bicycle with two pedals (PD) arranged rotatable on a frame, whereby each of the pedals (PD) is allocated to a guide mechanism (ZF) attached to the bicycle which causes a restricted guidance of the pedals (PD) in that the tread surface of the pedals (PD) is retained approximately in a given direction during pedalling, characterised in that an energy storage (KS) non-positively connected to the pedals has been provided which is tensioned once and is relieved once during every rotation of the pedals (PD).

14. A bicycle as set forth in claim (13) characterised in that the right pedal is used to tension the left energy storage and vice versa.

15. A bicycle as set forth in claims (13) or (14) characterised in that the tensioning action of the energy storage starts after the upper dead centre of the pedal and finishes in front of the lower dead centre.

16. A bicycle as set forth in one of the claims (13) through (15) characterised in that the tensioning action of the energy storage (KS) is effected in a larger angle range (φ3) than the relieving action (φ4).

17. A bicycle as set forth in one of the claims (13) through (16) characterised in that the energy storage (KS) is connected to the restricted guidance (ZF).

18. A bicycle as set forth in one of the claims (13) through (16) characterised in that the energy storage (KS) is connected with a separate hinged guide mechanism.

## Revendications

1. Bicyclette (FR) avec deux pédales mobiles (PD) logées au cadre, chacun des deux pédales (PD) disposant d'un mécanisme de guidage fixé à la bicyclette (FR) qui provoque le guidage obligatoire (ZF) des pédales de façon que pendant l'actionnement des pédales (PD) celles-ci sont toujours maintenues dans la direction prédéfinie, caractérisée par le fait que le mécanisme de guidage (ZF) présente une plaque (FP) de laquelle sortent des deux côtés deux barres (GS1, GS2, GS3, GS4) desquelles deux sont fixées au cadre de la bicyclette et les autres deux aux pédales (PD).

2. Bicyclette conformément à la spécification 1, caractérisée par le fait que le mécanisme de guidage (ZF) est exécuté comme lot de rattrapage qui peut être monté ultérieurement à la bicyclette (FR).

3. Bicyclette conformément à l'une des spécifications précédentes, caractérisée par le fait qu'une plaque de guidage (SF) est montée aux pédales (PD) servant de repose-pieds et/ou de point d'application du mécanisme de guidage(FE).

4. Bicyclette conformément à la spécification 3, caractérisée par le fait que la plaque de guidage est dotée d'un angle présentant une allure verticale auquel les barres correspondantes (GS3, GS4) sont fixées.

5. Bicyclette selon une des spécifications précédentes, caractérisée par le fait que dans le domaine supérieur du guidage obligatoire (ZFL; ZFR) il y a un support qui est prévu pour la cuisse (OSL; OSR).

6. Bicyclette conformément à la spécification 5, caractérisée par le fait que le support pour la cuisse (OSL; OSR) est exécuté en forme d'une cuve.

7. Bicyclette conformément à la spécification 5 ou 6, caractérisée par le fait que le support pour la cuisse (OSL; OSR) est doté d'un rembourrage.

8. Bicyclette selon une des spécifications 5 à 7, caractérisée par le fait que le support pour la cuisse (OSL; OSR) forme le siège du cycliste, la bicyclette n'ayant pas de selle dans ce cas-là.

9. Bicyclette avec deux pédales mobiles logées au cadre (FR), chacun des deux pédales (PD) disposant d'un mécanisme de guidage (ZF) fixé à la bicyclette qui provoque le guidage obligatoire des pédales (PD) de façon que pendant l'actionnement des pédales (PD) celles-ci sont largement maintenues dans une direction prédéfinie, surtout conformément à l'une des spécifications précédentes, caractérisée par le fait que chacune des pédales (PD) est guidée de façon légèrement inclinée en avant pendant l'actionnement des pédales.

10. Bicyclette selon la spécification 9, caractérisée par le fait que l'angle de déviation (α1) contre l'horizontale est situé entre 15 et 40°, et de préférence entre 25 et 35°.

11. Bicyclette selon une des spécifications 9 ou 10, caractérisée par le fait que l'angle de déviation (α1) au point mort supérieur est plus grand que l'angle de déviation (α2) au point mort inférieur.

12. Bicyclette selon une des spécifications précédentes, caractérisée par le fait qu'un repose-pieds (TP) monté à la pédale (PD) est un peu flambé en soi et cela dans la partie derrière vers le haut, de préférence d'environ 5°.

13. Bicyclette avec deux pédales mobiles logées au cadre (FR), chacun des deux pédales (PD) disposant d'un mécanisme de guidage (ZF) fixé à la bicyclette qui provoque le guidage obligatoire des pédales (PD) de façon que pendant l'actionnement des pédales celles-ci sont largement maintenues dans une direction prédéfinie , surtout conformément à l'une des spécifications précédentes, caractérisée par le fait qu'un accumulateur d'énergie (KS) communique par adhérence avec chacune des pédales et à chaque tour des pédales (PD) il est tantôt tendu, tantôt relâché.

14. Bicyclette selon la spécification 13, caractérisée par le fait que pour produire la tension de l'accumulateur gauche il faut actionner la pédale droite et vice versa.

15. Bicyclette selon une des spécifications 13 ou 14, caractérisée par le fait que la tension de l'accumulateur d'énergie commence chaque fois après le point mort supérieur de la pédale et se termine avant le point mort inférieur.

16. Bicyclette selon une des spécifications 13 à 15, caractérisée par la fait que la tension de l'accumulateur d'énergie (KS) est effectuée dans un domaine angulaire plus grand (φ3) que la relaxation (φ4).

17. Bicyclette selon une des spécifications 13 à 16, caractérisée par le fait que l'accumulateur d'énergie (KS) est relié avec le guidage obligatoire (ZF).

18. Bicyclette selon une des spécifications 13 à 16, caractérisée par le fait que l'accumulateur d'énergie (KS) est relié avec un propre guidage articulé.
